# EUROPEAN PATENT SPECIFICATION

(11) **EP 3 268 396 B1**
(45) Date of publication and mention of the grant of the patent: **17.04.2019**
(21) Application number: 16709005.9
(22) Date of filing: 07.03.2016
(51) Int. Cl.: C08F 4/651, C08F 10/06

(54) **CATALYST COMPONENTS FOR THE POLYMERIZATION OF OLEFINS**
KATALYSATORKOMPONENTEN ZUR OLEFINPOLYMERISIERUNG
COMPOSANTS DE CATALYSEUR POUR LA POLYMÉRISATION D'OLÉFINES

(30) Priority: 10.03.2015 EP 15158458
(43) Date of publication of application: 17.01.2018
(73) Proprietor: Basell Poliolefine Italia S.r.l., 20121 Milano (IT)
(72) Inventor: MIGNOGNA, Alessandro, 44122 Ferrara (IT); MORINI, Giampiero, 44122 Ferrara (IT); CHEVALIER, Reynald, 60200 Compiegne (FR)
(74) Representative: Giberti, Stefano
(86) International application number: PCT/EP2016/054772
(87) International publication number: WO 2016/142334

(56) References cited:
- EP-A1- 2 712 875
- US-A1- 2008 194 782
- US-A1- 2012 322 964

## Description

### FIELD OF THE INVENTION

The present disclosure relates to catalyst components for the polymerization of olefins, in particular propylene, comprising a Mg dihalide based support on which are supported Ti atoms and an electron donor compound containing an ester and a carbamate functional group. The present disclosure further relates to the catalysts obtained from said components and to their use in processes for the polymerization of olefins in particular propylene.

### BACKGROUND OF THE INVENTION

Catalyst components for the stereospecific polymerization of olefins are disclosed in the art. Concerning the polymerization of propylene, the Ziegler-Natta catalyst are industrially used which, in general terms, comprises a solid catalyst component, constituted by a magnesium dihalide on which are supported a titanium compound and an internal electron donor compound, used in combination with an Al-alkyl compound. However, when a higher crystallinity of the polymer is desired, also an external donor (for example an alkoxysilane) is needed in order to obtain higher isotacticity. One of the largely used classes of internal donors is constituted by the esters of phthalic acid, with diisobutylphthalate being the most used. The phthalates are used as internal donors in combination with alkylalkoxysilanes as external donor. This catalyst system gives good performances in terms of activity, isotacticity and xylene insolubility.

One of the problems associated with the use of this catalyst system is that the phthalates have recently raised concerns due to the medical issues associated with their use and some compounds within this class have been classified as source of heavy health problems.

Consequently, research activities have been devoted to discover alternative classes of internal donors for use in the preparation of catalyst components for propylene polymerization.

Some of the tested catalysts contain donors structures having contemporaneously amido groups and ester groups. PCT Publication No. WO2006/110234 describes amino acid derivatives including one carbamate group and one free ester function. The catalysts generated by these structures have very low activity and sterospecificity in bulk propylene polymerization (See Table 2 of PCT Publication No. WO2006/110234).

### SUMMARY OF THE INVENTION

Surprisingly, the applicant has found that a class of donors containing both a carbamate and an ester function within a specific structure generates catalysts showing an interesting balance of activity and stereospecificity.

Accordingly, the present disclosure provides a catalyst component for the polymerization of olefins comprising Mg, Ti, halogen and an electron donor of formula (I) or (II) 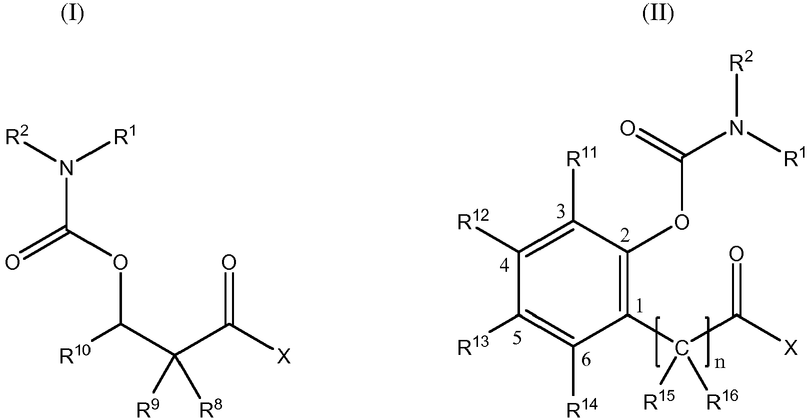 in which
- R¹ and R², independently, are hydrogen or C₁-C₁₅ hydrocarbon groups;
- X is a -OR³ or a -NR⁴R⁵ groups in which R³ is selected from C₁-C₁₅ hydrocarbon groups, optionally containing a heteroatom selected from halogen, P, S, N, O and R⁴-R⁵ groups, independently, are hydrogen or R³ groups which can be fused together to form a cycle;
- R⁸-R¹⁰ groups are independently hydrogen or a C₁-C₂₀ hydrocarbon radicals, optionally substituted with heteroatoms selected from halogen, P, S, N, O and Si, which can be fused together to form one or more cycles;
- R¹⁵ to R¹⁶ groups, equal to or different from each other, are hydrogen or R³ groups which can be fused together to form one or more cycles, n is an integer from 0 to 2; and
- R¹¹-R¹⁴, independently, are selected from hydrogen, halogens or C₁-C₁₅ hydrocarbon groups optionally substituted with heteroatoms selected from halogen, P, S, N, O and Si.

### DETAILED DESCRIPTION OF INVENTION

Preferred structures of formula (II) are those in which at least one, and preferably at least two, of the and R¹¹-R¹⁴ groups is/are different from hydrogen. In particular, preferred structures are those in which the aromatic ring is substituted in position 3,5 and/or 6. Substitution in positions 4, 3, and/or 6 is also preferred. In all these cases, and R¹¹-R¹⁴ groups are preferably selected from C₁-C₅ alkyl groups. Particularly preferred is the substitution in position 3 and/or 6 with a primary alkyl group especially methyl, and in position 4 and/or 5 with a tertiary alkyl group especially tert-butyl.

Preferred structures of formula (II) are those in which n is 1, preferably combined with R¹⁵ and R¹⁶ being hydrogen especially when combined with the aromatic ring substituted as described above.

In the structures of formulae (I)-(II) X is independently selected from either -OR³ or - NR⁴R⁵. Preferably, X is selected from -OR³ groups.

Preferably, in the structures of formulae (I)-(II) the R³ groups are independently selected from C₁-C₁₅ alkyl groups, C₆-C₁₄ aryl groups, C₃-C₁₅ cycloalkyl groups, and C₇-C₁₅ arylalkyl or alkylaryl groups; the same applies to R⁴ and R⁵ groups which can additionally be hydrogen. More preferably, the R¹, R² and R³ groups are independently selected from C₁-C₁₀ alkyl groups and even more preferably from C₁-C₅ alkyl groups in particular ethyl.

Preferably, the final amount of electron donor compound in the solid catalyst component ranges from 1 to 25% by weight preferably in the range from 3 to 20% by weight with respect to the total weight of the solid catalyst component.

Examples of structures according to formulae(I-II) are the following: ethyl 2-((diethylcarbamoyl)oxy)-3,5-diisopropylbenzoate, ethyl 2-((diethylcarbamoyl)oxy)-3,5-dimethylbenzoate, ethyl 2-((diethylcarbamoyl)oxy)-3-methylbenzoate, ethyl 2-((diethylcarbamoyl)oxy)-5-methylbenzoate, ethyl 2-((diethylcarbamoyl)oxy)benzoate ethyl 2-((dimethylcarbamoyl)oxy)benzoate, ethyl 2-((dipropylcarbamoyl)oxy)benzoate, ethyl 2-(carbamoyloxy)benzoate ethyl 5-(tert-butyl)-2-((diethylcarbamoyl)oxy)-3-methylbenzoate, ethyl 5-(tert-butyl)-2-((diethylcarbamoyl)oxy)benzoate, propyl 2-((diethylcarbamoyl)oxy)benzoate, 2-(diethylcarbamoyl)-4,6-diisopropylphenyl diethylcarbamate, 2-(diethylcarbamoyl)-4,6-dimethylphenyl diethylcarbamate, 2-(diethylcarbamoyl)-4-methylphenyl diethylcarbamate, 2-(diethylcarbamoyl)-6-methylphenyl diethylcarbamate, 2-(diethylcarbamoyl)phenyl carbamate, 2-(diethylcarbamoyl)phenyl diethylcarbamate, 2-(diethylcarbamoyl)phenyl dimethylcarbamate 2-(diethylcarbamoyl)phenyl dipropylcarbamate, 2-(dimethylcarbamoyl)phenyl dimethylcarbamate, 2-(dipropylcarbamoyl)phenyl diethylcarbamate, 2-carbamoylphenyl carbamate, 4-(tert-butyl)-2-(diethylcarbamoyl)-6-methylphenyl diethylcarbamate, 4-(tert-butyl)-2-(diethylcarbamoyl)phenyl diethylcarbamate, 2-(2-ethoxy-2-oxoethyl)phenyl piperidine-1-carboxylate, 2-(2-ethoxy-2-oxoethyl)phenyl pyrrolidine-1-carboxylate, ethyl 2-(2-((diethylcarbamoyl)oxy)-3,5-diisopropylphenyl)acetate, ethyl 2-(2-((diethylcarbamoyl)oxy)-3,5-dimethylphenyl)acetate ethyl 2-(2-((diethylcarbamoyl)oxy)-3-methylphenyl)acetate, ethyl 2-(2-((diethylcarbamoyl)oxy)-5-methylphenyl)acetate, ethyl 2-(2-((diethylcarbamoyl)oxy)phenyl)-3,3-dimethylbutanoate, ethyl 2-(2-((diethylcarbamoyl)oxy)phenyl)-3-methylbutanoate, ethyl 2-(2-((diethylcarbamoyl)oxy)phenyl)acetate, ethyl 2-(2-((diethylcarbamoyl)oxy)phenyl)butanoate, ethyl 2-(2-((diethylcarbamoyl)oxy)phenyl)pentanoate, ethyl 2-(2-((diethylcarbamoyl)oxy)phenyl)propanoate, ethyl 2-(2-((dimethylcarbamoyl)oxy)phenyl)acetate, ethyl 2-(2-((dipropylcarbamoyl)oxy)phenyl)acetate, ethyl 2-(2-(carbamoyloxy)phenyl)acetate, ethyl 2-(5-(tert-butyl)-2-((diethylcarbamoyl)oxy)-3-methylphenyl)-2-methylpropanoate, ethyl 2-(5-(tert-butyl)-2-((diethylcarbamoyl)oxy)-3-methylphenyl)acetate, ethyl 2-(5-(tert-butyl)-2-((diethylcarbamoyl)oxy)-3-methylphenyl)pentanoate, methyl 2-(2-((diethylcarbamoyl)oxy)phenyl)acetate, propyl 2-(2-((diethylcarbamoyl)oxy)phenyl)acetate, 2-(2-(diethylamino)-2-oxoethyl)-4,6-diisopropylphenyl diethylcarbamate, 2-(2-(diethylamino)-2-oxoethyl)phenyl carbamate, 2-(2-(diethylamino)-2-oxoethyl)phenyl diethylcarbamate, 4-(tert-butyl)-2-(2-(diethylamino)-2-oxoethyl)-6-methylphenyl diethylcarbamate, ethyl 3-(2-((diethylcarbamoyl)oxy)phenyl)-2-methylbutanoate, ethyl 3-(2-((diethylcarbamoyl)oxy)phenyl)propanoate, ethyl 3-(5-(tert-butyl)-2-((diethylcarbamoyl)oxy)-3-methylphenyl)propanoate, 2-(3-(diethylamino)-3-oxopropyl)phenyl diethylcarbamate, 2-(4-(diethylamino)-3-methyl-4-oxobutan-2-yl)phenyl diethylcarbamate, 4-(tert-butyl)-2-(3-(diethylamino)-3-oxopropyl)-6-methylphenyl diethylcarbamate, 4-ethoxy-4-oxobutan-2-yl piperidine-1-carboxylate, 4-ethoxy-4-oxobutan-2-yl pyrrolidine-1-carboxylate, butyl 3-((diethylcarbamoyl)oxy)-2-methylbutanoate, ethyl 3-((diethylcarbamoyl)oxy)-2,2,3-trimethylbutanoate, ethyl 3-((diethylcarbamoyl)oxy)-2,2-dimethylbutanoate, ethyl 3-((diethylcarbamoyl)oxy)-2,2-dimethylpropanoate, ethyl 3-((diethylcarbamoyl)oxy)-2-isobutyl-2-propylheptanoate, ethyl 3-((diethylcarbamoyl)oxy)-2-methylbutanoate, ethyl 3-((diethylcarbamoyl)oxy)-2-methylpentanoate, ethyl 3-((diethylcarbamoyl)oxy)-2-methylpropanoate, ethyl 3-((diethylcarbamoyl)oxy)butanoate, ethyl 3-((diethylcarbamoyl)oxy)propanoate, ethyl 3-((dimethylcarbamoyl)oxy)butanoate, ethyl 3-(carbamoyloxy)butanoate, propyl 3-((diethylcarbamoyl)oxy)-2-methylbutanoate, 4-(diethylamino)-3,3-dimethyl-4-oxobutan-2-yl diethylcarbamate, 4-(diethylamino)-3-methyl-4-oxobutan-2-yl diethylcarbamate, 4-(diethylamino)-4-oxobutan-2-yl diethylcarbamate, , ethyl 2-((diethylcarbamoyl)oxy)-2-methylpropanoate, ethyl 2-((diethylcarbamoyl)oxy)-2-phenylacetate, ethyl 2-((diethylcarbamoyl)oxy)-3,3-dimethylbutanoate, , , , , , , , ethyl 4-((diethylcarbamoyl)oxy)-2-methylbutanoate, ethyl 4-((diethylcarbamoyl)oxy)butanoate, ethyl 4-((diethylcarbamoyl)oxy)pentanoate, ethyl 8-((diethylcarbamoyl)oxy)-1-naphthoate, 4-(diethylamino)-3-methyl-4-oxobutyl diethylcarbamate, 4-(diethylamino)-4-oxobutyl diethylcarbamate, 5-(diethylamino)-5-oxopentan-2-yl diethylcarbamate.

The compounds falling in formulae (I)-(II) can be prepared by reacting a hydroxyester or hydroxyamide of general formula HO-A-COX with a carbamoyl chloride R¹R²N-CO-Cl in the presence of base such as a tertiary amine. In solid catalyst component of the present disclosure the amount of Ti atoms in the solid catalyst component is preferably higher than 2.5%wt more preferably higher than 3.0% with respect to the total weight of said catalyst component.

As explained above, the catalyst components of the present disclosure comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably MgCl₂ in active form which is disclosed as a support for Ziegler-Natta catalysts. Patents USP 4,298,718 and USP 4,495,338 were the first to describe the use of these compounds in Ziegler-Natta catalysis. These patents disclose magnesium dihalides in active form used as support or cosupport in components of catalysts for the polymerization of olefins characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present present disclosure are TiCl₄ and TiCl₃; furthermore, also Ti-haloalcoholates of formula Ti(OR)_{m-y}X_{y} can be used, where m is the valence of titanium, y is a number between 1 and m-1, X is halogen and R is a hydrocarbon radical having from 1 to 10 carbon atoms.

The preparation of the solid catalyst component can be carried out according to several methods. One method comprises the reaction between magnesium alcoholates or chloroalcoholates (in particular chloroalcoholates prepared according to USP 4,220,554) and an excess of TiCl₄ in the presence of the electron donor compounds at a temperature of about 80 to 120°C.

According to a preferred method, the solid catalyst component can be prepared by reacting a titanium compound of formula Ti(OR)_{m-y}X_{y}, where m is the valence of titanium and y is a number between 1 and m, preferably TiCl₄, with a magnesium chloride deriving from an adduct of formula MgCl₂•pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is lower than 3, preferably between 0.1 and 2.5. The reaction with the Ti compound can be carried out by suspending the adduct (dealcoholated or as such) in cold TiCl₄; the mixture is heated up to 80-130°C and kept at this temperature for 0.5-2 hours. The treatment with TiCl₄ can be carried out one or more times. The electron donor compound is preferably added during the treatment with TiCl₄. The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) between 20 and 500 m²/g and preferably between 50 and 400 m²/g, and a total porosity (by B.E.T. method) higher than 0.2 cm³/g preferably between 0.2 and 0.6 cm³/g. The porosity (Hg method) due to pores with radius up to 10.000Å ranges from 0.3 to 1.5 cm³/g, preferably from 0.45 to 1 cm³/g.

The solid catalyst component has an average particle size ranging from 5 to 120 µm and more preferably from 10 to 100 µm.

In any of these preparation methods the desired electron donor compounds can be added as such or, in an alternative way, it can be obtained *in situ* by using an appropriate precursor capable to be transformed in the desired electron donor compound by means, for example, of known chemical reactions.

Regardless of the preparation method used, the final amount of the electron donor compound of formula (I) is such that its molar ratio with respect to the Ti atoms is from 0.01 to 2, preferably from 0.05 to 1.5.

The solid catalyst components according to the present disclosure are converted into catalysts for the polymerization of olefins by reacting them with organoaluminum compounds according to available methods.

In particular, it is an object of the present disclosure a catalyst for the polymerization of olefins CH₂=CHR, in which R is hydrogen or a hydrocarbyl radical with 1-12 carbon atoms, comprising the product obtained by contacting:
(i) the solid catalyst component as disclosed above and
(ii) an alkylaluminum compound and optionally,
(iii) an external electron donor compound.

The alkyl-Al compound (ii) is preferably chosen among the trialkyl aluminum compounds such as for example triethylaluminum, triisobutylaluminum, tri-n-butylaluminum, tri-n-hexylaluminum, tri-n-octylaluminum. It is also possible to use alkylaluminum halides, alkylaluminum hydrides or alkylaluminum sesquichlorides, such as AlEt₂Cl and Al₂Et₃Cl₃, possibly in mixture with the above cited trialkylaluminums.

The external electron-donor compounds include silicon compounds, ethers, esters, amines, heterocyclic compounds and particularly 2,2,6,6-tetramethylpiperidine and ketones.

Another class of preferred external donor compounds is that of silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms. Particularly preferred are the silicon compounds in which a is 1, b is 1, c is 2, at least one of R₇ and R₈ is selected from branched alkyl, cycloalkyl or aryl groups with 3-10 carbon atoms optionally containing heteroatoms and R₉ is a C₁-C₁₀ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane, (2-ethylpiperidinyl)t-butyldimethoxysilane, (2-ethylpiperidinyl)thexyldimethoxysilane, (3,3,3-trifluoro-n-propyl)(2-ethylpiperidinyl)dimethoxysilane, methyl(3,3,3-trifluoro-n-propyl)dimethoxysilane, N,N-diethylaminotriethoxysilane. Moreover, are also preferred the silicon compounds in which a is 0, c is 3, R₈ is a branched alkyl or cycloalkyl group, optionally containing heteroatoms, and R₉ is methyl. Examples of such preferred silicon compounds are cyclohexyltrimethoxysilane, t-butyltrimethoxysilane and thexyltrimethoxysilane.

The electron donor compound (iii) is used in such an amount to give a molar ratio between the organoaluminum compound and said electron donor compound (iii) of from 0.1 to 500, preferably from 1 to 300 and more preferably from 3 to 100.

Therefore, it constitutes a further object of the present disclosure a process for the (co)polymerization of olefins CH₂=CHR, in which R is hydrogen or a hydrocarbyl radical with 1-12 carbon atoms, carried out in the presence of a catalyst comprising the product of the reaction between:
(i) the solid catalyst component of the present disclosure;
(ii) an alkylaluminum compound and,
(iii) optionally an electron-donor compound (external donor).

The polymerization process can be carried out according to various techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization is carried out at temperature of from 20 to 120°C, preferably of from 40 to 80°C. When the polymerization is carried out in gas-phase the operating pressure is between 0.5 and 5 MPa, preferably between 1 and 4 MPa. In the bulk polymerization the operating pressure is between 1 and 8 MPa, preferably between 1.5 and 5 MPa.

The following examples are given in order to further illustrate the present disclosure.

### CHARACTERIZATIONS

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content of said xylene-soluble fraction is expressed as a percentage of the original 2.5 grams and then, by difference, the X.I. %.

### Determination of donors.

The content of electron donor has been carried out via gas-chromatography. The solid component was dissolved in acidic water. The solution was extracted with ethyl acetate, an internal standard was added, and a sample of the organic phase was analyzed in a gas chromatograph, to determine the amount of donor present at the starting catalyst compound.

### Melt flow rate (MFR)

The melt flow rate MIL of the polymer was determined according to ISO 1133 (230°C, 2.16 Kg).

### EXAMPLES

**N-Z-L-proline methyl ester** used in comparative example 1 is available from Sigma-Aldrich.

### General procedure for preparation of the spherical adducts

An initial amount of microspheroidal MgCl₂·2.8C₂H₅OH was prepared according to the method described in Example 2 of WO98/44009, but operating on larger scale.

### General procedure for the preparation of the solid catalyst component

Into a 500 mL round bottom flask, equipped with mechanical stirrer, cooler and thermometer 250 mL of TiCl₄ were introduced at room temperature under nitrogen atmosphere. After cooling to 0°C, while stirring, the internal donor and 10.0 g of the spherical adduct (prepared as described above) were sequentially added into the flask. The amount of charged internal donor was such to charge a Mg/donor molar ratio of 6. The temperature was raised to 100°C and maintained for 2 hours. Thereafter, stirring was stopped, the solid product was allowed to settle and the supernatant liquid was siphoned off at 100°C. After the supernatant was removed, additional fresh TiCl₄ was added to reach the initial liquid volume again. The mixture was then heated at 120°C and kept at this temperature for 1 hour. Stirring was stopped again, the solid was allowed to settle and the supernatant liquid was siphoned off.

The solid was washed with anhydrous hexane six times (6 x 100 mL) in temperature gradient down to 60°C and one time (100 mL) at room temperature. The obtained solid was then dried under vacuum and analyzed.

### General procedure for the polymerization of propylene

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 mL of anhydrous hexane, 0.76 g of AlEt₃, the external electron donor indicated in Table 1 (if used) and 0.006÷0.010 g of solid catalyst component. The autoclave was closed; subsequently 2.0 NL of hydrogen were added. Then, under stirring, 1.2 kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed and fractionated with o-xylene to determine the amount of the xylene insoluble (X.I.) fraction.

### Donor synthesis

### Synthesis of the donor used in Example 1

A mixture of 3,5-diisopropyl-2-hydroxybenzoic acid (8.00 g, 36.2 mmol) and thionyl chloride (20 mL) is heated at reflux for 1 h. After cooling excess thionyl chloride is removed in vacuo and the residue is taken up in dichloromethane (50 mL). The dichloromethane solution is then added dropwise to a solution of diethylamine (20 mL) in dichloromethane (100 mL), cooled to 0 °C and the resulting solution left to stir for 1 h. The excess diethylamine and dichloromethane is removed in vacuo and the residue taken up with dichloromethane (300 mL). The organic phase is washed with 1M hydrochloric acid (100 mL), water (100 mL), dried (MgSO4), filtered and the solvent removed in vacuo. The residue is dissolved in toluene (100 mL) then TiCl4 is added (4 mL, 36.2 mmol), followed by diethyl carbamoyl chloride (5 mL, 39 mmol). After two hours at room temperature the mixture is carefully quenched with acidic water then the organic layer is separated and washed with water until neutral pH, then is anhydrified over Na2SO4 and the solvent is distilled off to afford pure 2-(diethylcarbamoyl)-4,6-diisopropylphenyl diethylcarbamate.

### Synthesis of the donor used in Example 2

First step: 2-Hydroxyphenylacetic acid (10g, 65 mmol) is treated with 20 mL of ethanol and 0.5 mL of concentrated H2SO4 at reflux until TLC show the esterification is completed. Then the mixture is diluted with water and diethyl ether the organic layer is separated and washed with water until neutral pH, then is anhydrified over Na2SO4 and the solvent is distilled off to afford pure ethyl 2-hydroxyphenylacetate (yield 98%).

Second step: In a 250 mL round bottom flask, under nitrogen are introduced THF (80 mL), NaH (1.5 g, 61 mmol), diethyl carbamoyl chloride (6.7 mL, 67 mmol) and ethyl 2-hydroxyphenylacetate (11 g, 61 mmol) dissolved in 15 mL of THF is added dropwise under stirring and cooling. The mixture is stirred at room temperature until GC show the starting is complete converted into product. Then the reaction mixture is worked-up to afford ethyl 2-(2-((diethylcarbamoyl)oxy)phenyl)acetate (16 g, 94% yield) with a GC purity of 98%.

### Synthesis of the donor used in Examples 3-4

### Ethyl 2-(5-(tert-butyl)-2-((diethylcarbamoyl)oxy)-3-methylphenyl)acetate

First step: In a 500 mL round bottom flask, under nitrogen at room temperature, are introduced 2,6-xylenol (54.5 g, 0.45 mol), heptane (130 mL), tert-butanol (66 g, 0.9 mol), then concentrated H2SO4.

(28.4 mL, 0.54 mol) is added dropwise under stirring. After one hour the reaction is completed and the mixture is diluted with water and diethyl ether. The organic layer is separated and washed with water until neutral pH, then is anhydrified over Na2SO4 and the solvent is distilled off to afford 81.3 g of 4-tert-butyl-2,6-xylenol with a GC purity of 98%wt (yield 98%) which is used in the next step without further purification.

Second step: In a 2 litre round bottom flask, under nitrogen are introduced 4-tert-butyl-2,6-xylenol (132.4 g, 0.74 mol), THF (750 mL) and sodium ethoxide (62.9 g, 0.9 mol). After 30 minute of post-reaction time diethylcarbamoyl chloride (122 mL, 0.97 mol) is added slowly dropwise. The reaction is monitored via GC and extra sodium ethoxide and diethylcarbamoyl chloride are added to convert completely the starting. Then the mixture is diluted with water and i-hexanes, the organic layer is separated and washed with water until neutral pH, then is anhydrified over Na2SO4 and the solvent is distilled off to afford 197.8 g of 4-(tert-butyl)-2,6-dimethylphenyl diethylcarbamate with a GC purity of 98%wt (yield 94%) which solidified upon standing. The product is used in the next step without further purification.

Third step: In a 2 litre round bottom flask, under nitrogen are introduced THF (770 mL), 4-(tert-butyl)-2,6-dimethylphenyl diethylcarbamate (173.5 g, 0.63 mol) and diisopropylamine (8.8 mL, 0.063 mol) then the mixture is cooled to 0°C and n-BuLi is added dropwise (solution 2.5 mol/L in hexanes, 520 mL, 1.3 mol). Then the cooling bath is removed and the reaction is let to warm to room temperature. After 30 minutes at this temperature the reaction is diluted with water and ethyl acetate. The organic layer is separated and washed with water until neutral pH, then is anhydrified over Na2SO4 and the solvent is distilled off to afford 177.4 g of 2-(5-(tert-butyl)-2-hydroxy-3-methylphenyl)-N,N-diethylacetamide with a purity GC of 94% (yield 96%) which is used in the next step without further purification.

Fourth step: In a round bottom flask are introduced 2-(5-(tert-butyl)-2-hydroxy-3-methylphenyl)-N,N-diethylacetamide (purity 94% from the previous step, 170 g, 0.57 mol), ethanol (200 mL) and concentrated H2SO4 (30.4 mL, 0.57 mol). The mixture is brought to reflux and kept ad this temperature for 5 hours then is diluted with water and ethyl acetate. The organic layer is separated and washed with water until neutral pH, then is anhydrified over Na2SO4 and the solvent is distilled off to afford a dark oil which is purified via heptane crystallization to afford 86.1 g of 5-(tert-butyl)-7-methylbenzofuran-2(3H)-one with a GC purity of 98%wt (yield 72%).

Fifth step: 5-(tert-butyl)-7-methylbenzofuran-2(3H)-one (83.4 g, 0.4 mol) from the previous step is treated with ethanol (200 mL) and a catalytic amount of concentrated H2SO4 at reflux for 30 minutes then the mixture is worked-up to afford ethyl 2-(5-(tert-butyl)-2-hydroxy-3-methylphenyl) acetate.

Sixth step: In a 250 mL round bottom flask, under nitrogen are introduced THF (100 mL) ethyl 2-(5-(tert-butyl)-2-hydroxy-3-methylphenyl)acetate (10 g, 0.040 mol), sodium ethoxide (2.9 g, 0.042 mol) then diethylcarbamoyl chloride (5.3 mL, 0.042 mol) is added slowly dropwise. After 18 hours at room temperature the reaction is complete and the mixture is worked-up to afford ethyl 2-(5-(tert-butyl)-2-((diethylcarbamoyl)oxy)-3-methylphenyl)acetate.

### Examples 1-3 and Comparative 1

The catalyst components were prepared according to the general procedure using the donors indicated in Table 1. The so obtained solid catalyst components were analyzed for their composition, and were tested in polymerization of propylene, using the procedure described above. The results are listed in Table 1.

### Example 4

The catalyst component was prepared according to the general procedure with the difference that the, were used 10.0 g of a spherical adduct prepared as described in the general procedure and then subject to thermal dealcoholation treatment until the alcohol content is lowered to 47%wt. Moreover, the first reaction step with TiCl4 was carried out at a temperature of 120° for two hours, the second reaction step with TiCl4 was also carried out at a temperature of 120° for 0.5 hours and an additional third step of reaction with TiCl4 was carried out at a temperature of 120° for 0.5 hours.

**Table 1**

| | **Catalyst compostion** | | | **Polymerization** | | | |
|---|---|---|---|---|---|---|---|
| | **Internal Donor** | | **Ti** | **ED** | **Mileage** | **XI** | **MIL** |
| | **Name** | **%wt** | **%wt** | | **kg/g** | **%wt** | **g/10'** |
| 1 | 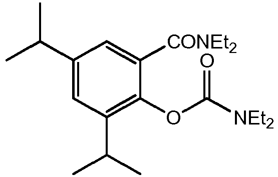 | 5.0 | 4.0 | D | 21.5 | 94.7 | 7.8 |
| 2 | 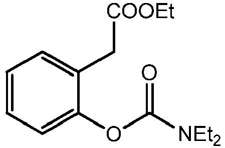 | nd | 3.0 | D | 19.2 | 95.8 | 1.2 |
| 3 | 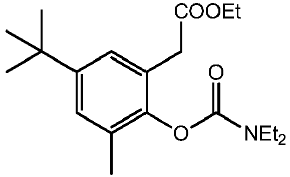 | 17.3 | 4 | D | 86.5 | 98.8 | 0.5 |
| 4 | " | 17.0 | 3 | D | 66.3 | 98.5 | 1.2 |
| C 1 | 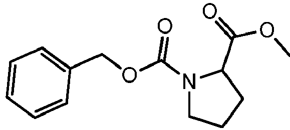 | n.d. | 5.4 | D | 13 | 93.1 | 6.9 |
| | N-L-Z-Proline methyl ester | | | | | | |

| | | | | | | | |
|---|---|---|---|---|---|---|---|
| ED: External Donor. D: dicyclopentyldimethoxysilane nd: not determined | | | | | | | |

## Claims

1. A solid catalyst component for the polymerization of olefins comprising Mg, Ti, halogen and an electron donor of formula (I) or (II) 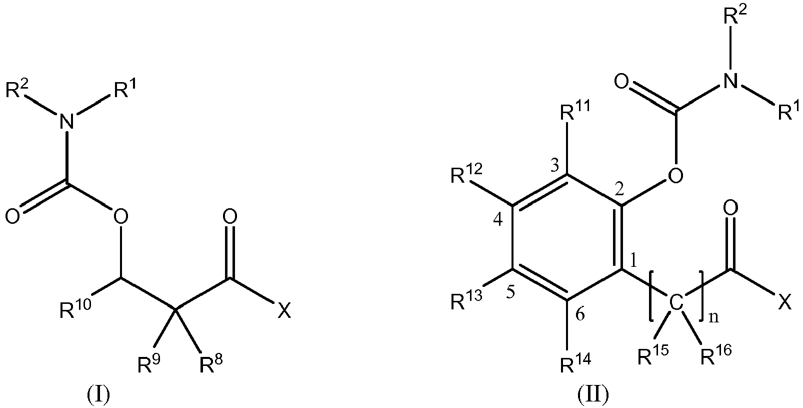 in which
- R¹ and R², independently, are hydrogen or C₁-C₁₅ hydrocarbon groups;
- X is a -OR³ or a -NR⁴R⁵ groups in which R³ is selected from C₁-C₁₅ hydrocarbon groups, optionally containing a heteroatom selected from halogen, P, S, N, O and R⁴-R⁵ groups, independently, are hydrogen or R³ groups which can be fused together to form a cycle;
- R⁸-R¹⁰ groups are independently hydrogen or a C₁-C₂₀ hydrocarbon radicals, optionally substituted with heteroatoms selected from halogen, P, S, N, O and Si, which can be fused together to form one or more cycles;
- R¹⁵ to R¹⁶ groups, equal to or different from each other, are hydrogen or R³ groups which can be fused together to form one or more cycles, n is an integer from 0 to 2; and
- R¹¹-R¹⁴, independently, are selected from hydrogen, halogens or C₁-C₁₅ hydrocarbon groups optionally substituted with heteroatoms selected from halogen, P, S, N, O and Si.

2. The catalyst component according to claim 1 in which in the electron donor of formula (II) the aromatic ring is substituted in position 3 and/or 6 with a primary alkyl group.

3. The catalyst component according to claim 2 in which the primary alkyl group is methyl.

4. The catalyst component according to claim 1 in which in the electron donor of formula (II) the aromatic ring is substituted in position 4 and/or 5 with a tertiary alkyl group.

5. The catalyst component according to claim 4 in which the tertiary alkyl group is t-butyl.

6. The catalyst component according to claim 1 in which in the electron donor of formula (II) n is 1.

7. The catalyst component according to claim 1 in which R³ groups are independently selected from C₁-C₁₅ alkyl groups, C₆-C₁₄ aryl groups, C₃-C₁₅ cycloalkyl groups, and C₇-C₁₅ arylalkyl or alkylaryl groups and R⁴-R⁵ groups are hydrogen or have the same meaning as R³.

8. The catalyst component according to claim 7 in which R¹, R² and R³ groups are independently selected from C₁-C₅ alkyl groups.

9. The catalyst component according to claim 8 in which R¹, R² and R³ groups are ethyl.

10. The catalyst component according to anyone of the preceding claims in which X is OR³.

11. The catalyst component according to claim 1 in which the final amount of electron donor compound in the solid catalyst component ranges from 1 to 25% by weight with respect to the total weight of the solid catalyst component.

12. A catalyst for the polymerization of olefins comprising the product of the reaction between:
(i) the solid catalyst component according to any of the preceding claims and
(ii) an alkylaluminum compound and optionally,
(iii) an external electron donor compound.

13. The catalyst according to claim 12 further comprising an external electron donor compound.

14. The catalyst according to claim 13 in which the electron donor compound is selected from silicon compounds of formula (R₇)ₐ(R₈)_{b}Si(OR₉)_{c}, where a and b are integers from 0 to 2, c is an integer from 1 to 4 and the sum (a+b+c) is 4; R₇, R₈, and R₉, are radicals with 1-18 carbon atoms optionally containing heteroatoms.

15. A process for the (co)polymerization of olefins CH₂=CHR, in which R is hydrogen or a hydrocarbyl radical with 1-12 carbon atoms, carried out in the presence of a catalyst system comprising the product of the reaction between:
i. the solid catalyst component according to any of the claims 1-11;
ii. an alkylaluminum compound and,
iii. optionally an external donor compound.

## Patentansprüche

1. Feste Katalysatorkomponente für die Polymerisation von Olefinen, umfassend Mg, Ti, Halogen und einen Elektronendonor mit der Formel (I) oder (II) 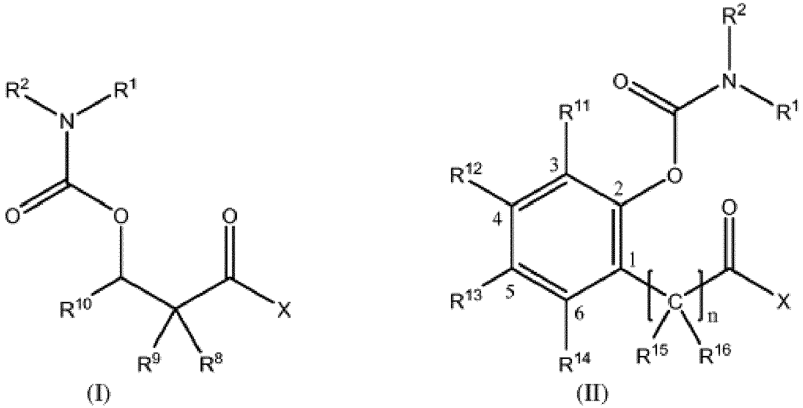 in der
- R¹ und R² unabhängig Wasserstoff oder C₁-C₁₅-Kohlenwasserstoffgruppen sind;
- X eine Gruppe -OR³ oder eine Gruppe -NR⁴R⁵ ist, wobei R³ ausgewählt ist aus C₁-C₁₅-Kohlenwasserstoffgruppen, die gegebenenfalls ein Heteroatom ausgewählt aus Halogen, P, S, N, O enthalten, und wobei die Gruppen R⁴ bis R⁵ unabhängig Wasserstoff oder Gruppen R³ sind, die unter Bildung eines Cyclus miteinander kondensiert sein können;
- die Gruppen R⁸ bis R¹⁰ unabhängig Wasserstoff oder C₁-C₂₀-Kohlenwasserstoffreste sind, die gegebenenfalls mit Heteroatomen ausgewählt aus Halogen, P, S, N, O und Si substituiert sind, die unter Bildung von einem oder mehreren Cyclen miteinander kondensiert sein können;
- die Gruppen R¹⁵ bis R¹⁶, die gleich oder voneinander verschieden sind, Wasserstoff oder Gruppen R³ sind, die unter Bildung von einem oder mehreren Cyclen miteinander kondensiert sein können, n eine ganze Zahl von 0 bis 2 ist; und
- R¹¹ bis R¹⁴ unabhängig ausgewählt sind aus Wasserstoff, Halogenen oder C₁-C₁₅-Kohlenwasserstoffgruppen, die gegebenenfalls mit Heteroatomen ausgewählt aus Halogen, P, S, N, O und Si substituiert sind.

2. Katalysatorkomponente nach Anspruch 1, wobei in dem Elektronendonor der Formel (II) der aromatische Ring in Position 3 und/oder 6 mit einer primären Alkylgruppe substituiert ist

3. Katalysatorkomponente nach Anspruch 2, wobei die primäre Alkylgruppe Methyl ist.

4. Katalysatorkomponente nach Anspruch 1, wobei in dem Elektronendonor der Formel (II) der aromatische Ring in Position 4 und/oder 5 mit einer tertiären Alkylgruppe substituiert ist.

5. Katalysatorkomponente nach Anspruch 4, wobei die tertiäre Alkylgruppe t-Butyl ist.

6. Katalysatorkomponente nach Anspruch 1, wobei n in dem Elektronendonor der Formel (II) 1 ist.

7. Katalysatorkomponente nach Anspruch 1, wobei die Gruppen R³ unabhängig ausgewählt sind aus C₁-C₁₅-Alkylgruppen, C₆-C₁₄-Arylgruppen, C₃-C₁₅-Cycloalkylgruppen und C₇-C₁₅-Arylalkyl- oder Alkylarylgruppen, und die Gruppen R⁴ bis R⁵ Wasserstoff sind oder die gleiche Bedeutung wie R³ haben.

8. Katalysatorkomponente nach Anspruch 7, wobei die Gruppen R¹, R² und R³ unabhängig ausgewählt sind aus C₁-C₅-Alkylgruppen.

9. Katalysatorkomponente nach Anspruch 8, wobei die Gruppen R¹, R² und R³ Ethyl sind.

10. Katalysatorkomponente nach einem der vorhergehenden Ansprüche, wobei X OR³ ist.

11. Katalysatorkomponente nach Anspruch 1, wobei die letztendliche Menge an Elektronendonorverbindung in der festen Katalysatorkomponente im Bereich von 1 bis 25 Gew.% liegt, bezogen auf das Gesamtgewicht der festen Katalysatorkomponente.

12. Katalysator zur Polymerisation von Olefinen, umfassend das Produkt der Reaktion zwischen:
(i) der festen Katalysatorkomponente gemäß einem der vorhergehenden Ansprüche und
(ii) einer Alkylaluminiumverbindung und gegebenenfalls
(iii)einer externen Elektronendonorverbindung.

13. Katalysator nach Anspruch 12, ferner umfassend eine externe Elektronendonorverbindung.

14. Katalysator nach Anspruch 13, wobei die Elektronendonorverbindung ausgewählt ist aus Siliciumverbindungen der Formel (R₇)ₐ(R₈)_{b}Si(OR₉)_{c}, wobei a und b ganze Zahlen von 0 bis 2 sind, c eine ganze Zahl von 1 bis 4 ist und die Summe (a+b+c) 4 ist; R₇, R₈ und R₉ Reste mit 1 bis 18 Kohlenstoffatomen sind, die gegebenenfalls Heteroatome enthalten.

15. Verfahren zur (Co)polymerisation von Olefinen CH₂=CHR, wobei R Wasserstoff oder ein Kohlenwasserstoffrest mit 1 bis 12 Kohlenstoffatomen ist, welches in Gegenwart eines Katalysatorsystems durchgeführt wird, welches das Produkt der Reaktion zwischen:
i. der festen Katalysatorkomponente nach einem der Ansprüche 1 bis 11;
ii. einer Alkylaluminiumverbindung und
iii. gegebenenfalls einer externen Donorverbindung umfasst.

## Revendications

1. Composant de catalyseur solide pour la polymérisation d'oléfines comprenant Mg, Ti, halogène et un donneur d'électrons de formule (I) ou (II) 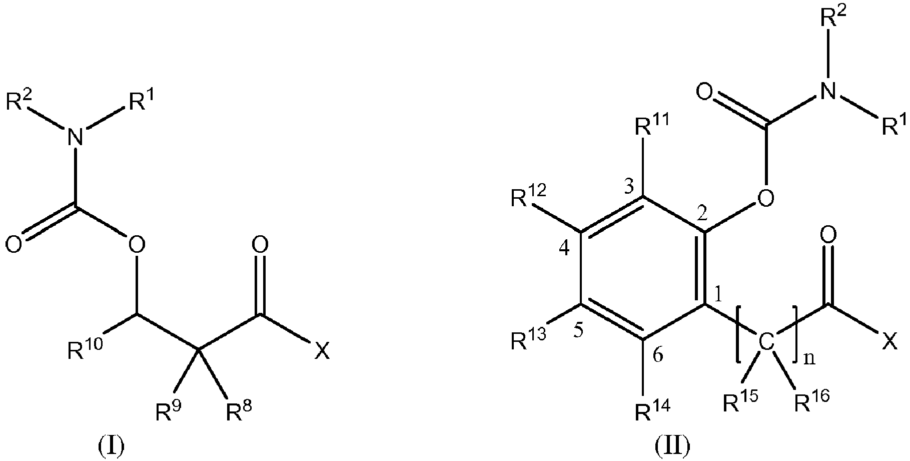 dans laquelle
- R¹ et R², indépendamment, sont hydrogène ou des groupes hydrocarbonés en C₁-C₁₅ ;
- X est un groupe -OR³ ou un groupe -NR⁴R⁵ dans lequel R³ est choisi parmi des groupes hydrocarbonés en C₁-C₁₅, contenant optionnellement un hétéroatome choisi parmi halogène, P, S, N, O et les groupes R⁴-R⁵, indépendamment, sont hydrogène ou des groupes R³ qui peuvent être fusionnés ensemble pour former un cycle ;
- les groupes R⁸-R¹⁰ sont indépendamment hydrogène ou un radical hydrocarboné en Ci-C₂₀, optionnellement substitué par des hétéroatomes choisis parmi halogène, P, S, N, O et Si, qui peuvent être fusionnés ensemble pour former un ou plusieurs cycles ;
- les groupes de R¹⁵ à R¹⁶ identiques ou différents les uns des autres, sont hydrogène ou des groupes R³ qui peuvent être fusionnés ensemble pour former un ou plusieurs cycles, n est un nombre entier allant de 0 à 2 ; et
- R¹¹-R¹⁴ sont indépendamment choisis parmi hydrogène, des halogènes ou des groupes hydrocarbonés en C₁-C₁₅ optionnellement substitués par des hétéroatomes choisis parmi halogène P, S, N, O et Si.

2. Composant de catalyseur selon la revendication 1 dans lequel, dans le donneur d'électrons de formule (II), le cycle aromatique est substitué en position 3 et/ou 6 avec un groupe alkyle primaire.

3. Composant de catalyseur selon la revendication 2 dans lequel le groupe alkyle primaire est le méthyle.

4. Composant de catalyseur selon la revendication 1 dans lequel, dans le donneur d'électrons de formule (II), le cycle aromatique est substitué en position 4 et/ou 5 avec un groupe alkyle tertiaire.

5. Composant de catalyseur selon la revendication 4 dans lequel le groupe alkyle tertiaire est t-butyle.

6. Composant de catalyseur selon la revendication 1 dans lequel, dans le donneur d'électrons de formule (II), n est 1.

7. Composant de catalyseur selon la revendication 1 dans lequel les groupes R³ sont indépendamment choisis parmi des groupes alkyle en C₁-C₁₅, des groupes aryle en C₆-C₁₄, des groupes cycloalkyle en C₃-C₁₅, et des groupes arylalkyle ou alkylaryle en C₇-C₁₅ et les groupes R⁴-R⁵ sont hydrogène ou ont la même signification que R³.

8. Composant de catalyseur selon la revendication 7 dans lequel les groups R¹, R² et R³ sont indépendamment choisis parmi les groupes alkyle en C₁-C₅.

9. Composant de catalyseur selon la revendication 8 dans lequel les groupes R¹, R² et R³ sont éthyle.

10. Composant de catalyseur selon l'une quelconque des revendications précédentes dans lequel X est OR³.

11. Composant de catalyseur selon la revendication 1 dans lequel la quantité finale de composé donneur d'électrons dans le composant de catalyseur solide va de 1 à 25 % en poids par rapport au poids total du composant de catalyseur solide.

12. Catalyseur pour la polymérisation d'oléfines comprenant le produit de la réaction entre :
(i) le composant de catalyseur solide selon l'une quelconque des revendications précédentes et
(ii) un composé de l'alkylaluminium et optionnellement,
(iii) un composé donneur d'électrons externe.

13. Catalyseur selon la revendication 12 comprenant, en outre, un composé donneur d'électrons externe.

14. Catalyseur selon la revendication 13 dans lequel le composé donneur d'électrons est choisi parmi des composés du silicium de formule (R₇)ₐ(R₈)_{b}Si(OR₉)_{c}, où a et b sont des nombres entiers allant de 0 à 2, c est un nombre entier allant de 1 à 4 et la somme (a+b+c) est 4 ; R₇, R₈, et R₉ sont des radicaux ayant 1 à 18 atomes de carbone contenant éventuellement des hétéroatomes.

15. Procédé pour la (co)polymérisation d'oléfines CH₂=CHR, dans lesquelles R est hydrogène ou un radical hydrocarbyle ayant de 1 à 12 atomes de carbone, réalisée en présence d'un système catalyseur comprenant le produit de la réaction entre :
i. le composant de catalyseur solide selon l'une quelconque des revendications 1 à 11 ;
ii. un composé de l'alkylaluminium et,
iii. optionnellement, un composé donneur externe.
